# EUROPEAN PATENT APPLICATION

(11) **EP 4 782 342 A1**
(43) Date of publication of application: **29.07.2026**
(21) Application number: 23953045.4
(22) Date of filing: 21.09.2023
(51) Int. Cl.: B64G 1/24, B64G 1/22, B64G 1/62

(54) **DEORBITING DEVICE**

(71) Applicant: Bull Co., Ltd., Utsunomiya-shi, Tochigi 320-0806 (JP)
(72) Inventor: KAWAMURA, Masaaki, Utsunomiya-shi, Tochigi 320-0806 (JP); KAMACHI, Koh, Utsunomiya-shi, Tochigi 320-0806 (JP); TSURUDA, Yoshihiro, Utsunomiya-shi, Tochigi 320-0806 (JP); ISHIGAKI, Nozomu, Utsunomiya-shi, Tochigi 320-0806 (JP); UTO, Yasuhito, Utsunomiya-shi, Tochigi 320-0806 (JP)
(74) Representative: Bardehle Pagenberg Partnerschaft mbB Patentanwälte Rechtsanwälte
(86) International application number: PCT/JP2023/034259
(87) International publication number: WO 2025/062560

(57) **Abstract**

An aspect of the present invention provides a deorbit apparatus mounted on an object that moves along an orbit in outer space and used to deorbit the object, the deorbit apparatus including: a deorbit unit including a resistance-force generation unit that generates a resistance force against movement of the object on the orbit; an examination unit for performing a specified examination; and a control unit that performs control related to the deorbit unit and/or the examination unit in accordance with a specified condition.

## Description

### Technical Field

The present invention relates to a deorbit apparatus.

### Background Art

In the development of spacecraft such as artificial satellites, rockets, or space stations, durability examinations for various components, electronic devices, or the like used as parts are required to be performed in actual outer space. Furthermore, various technological developments utilizing the space environment have been advanced. For example, in microgravity environments, studies on drug discovery or medication methods, and crystal growth experiments leading to higher performance of semiconductors or the like, have been performed.

For example, Patent Literature 1 describes a space medical device that is mounted on a spacecraft such as an artificial satellite and can perform medical examinations in a space environment where a zero-gravity or microgravity state is continuously maintained.

### Citation List

### Patent Literature

Patent Literature 1: Patent Publication JP-A-2021-19511

### Summary of Invention

### Technical Problem

However, because spacecraft and other devices utilized in outer space require high durability against vibrations or the like during launch or orbital operations, the cost of various components, such as power supplies, communication modules, and electrical and mechanical interfaces, can become significant. Furthermore, although environmental conditions in outer space, such as gravity or radiation distribution and atmospheric density, vary with orbital altitude, spacecraft ordinarily orbit at a constant altitude. Therefore, when there is a need to perform examinations at various altitudes, the examinations must be performed using a plurality of spacecraft in orbits at different altitudes, which further increases cost.

In view of the above, it is an object of the present invention to provide an apparatus capable of performing examinations at various altitudes in outer space at low cost.

### Solution to Problem

An aspect of the present invention provides a deorbit apparatus mounted on an object that moves along an orbit in outer space and used to deorbit the object, the deorbit apparatus including: a deorbit unit including a resistance-force generation unit that generates a resistance force against movement of the object on the orbit; an examination unit for performing a specified examination; and a control unit that performs control related to the deorbit unit and/or the examination unit in accordance with a specified condition.

According to this aspect, because the examination unit can use various devices and components included in the deorbit apparatus mounted on the object, it is not necessary to separately mount the examination unit on the object, thereby reducing the cost of the examination unit. Furthermore, because the altitude of the object gradually decreases as it is deorbited by the deorbit unit provided in the deorbit apparatus, the examination unit can perform examinations at various altitudes during the deorbit process.

### Advantageous Effect of Invention

According to the present invention, it is possible to provide an apparatus capable of performing examinations at various altitudes in outer space at low cost.

### Brief Description of Drawings

[Figure 1] Figure 1 is a schematic diagram illustrating a state in which a deorbit apparatus 3 according to an embodiment is mounted on a spacecraft 2.
[Figure 2] Figure 2 is a schematic diagram illustrating another state in which the deorbit apparatus 3 according to the embodiment is mounted on the spacecraft.
[Figure 3] Figure 3 is a block diagram illustrating an example of the functional configuration of the deorbit apparatus 3 according to the embodiment.
[Figure 4] Figure 4 is a schematic diagram illustrating an example of the arrangement of a deorbit unit 4 and an examination unit 5 in the deorbit apparatus 3 according to the embodiment.

### Description of Embodiments

With reference to the accompanying drawings, preferred embodiments of the present invention will be described (Note that in each figure, elements indicated by the same reference numerals have the same or similar configurations).

### (1) Introduction

So-called debris (space debris), which includes spacecraft that remain in orbit even after completing their missions, fragments of broken spacecraft, and the like, has become an issue. In order to remove such debris from orbit, PMD (Post Mission Disposal), which represents a method in which a deorbit apparatus previously mounted on a spacecraft is activated to remotely remove the spacecraft from the orbit, has been employed. By employing this deorbit apparatus, the debris deorbits and gradually decreases its altitude toward the atmosphere, where it can burn up during atmospheric entry.

A deorbit apparatus according to the present embodiment includes, in addition to a deorbit unit, an examination unit for performing specified examinations. As a result, by using a deorbit apparatus (PMD apparatus) expected to be mounted on spacecraft such as many rockets or artificial satellites as countermeasures against debris, it is possible to reuse the spacecraft that have completed their missions and would otherwise be discarded as a platform that can perform various experiments in outer space. Furthermore, it is possible to perform various examinations using the examination unit at various altitudes during the deorbit process. Furthermore, by employing an interface for mounting the deorbit apparatus on the spacecraft, it is possible to omit an interface for the examination unit and reduce its installation cost.

### (2) Overall Configuration

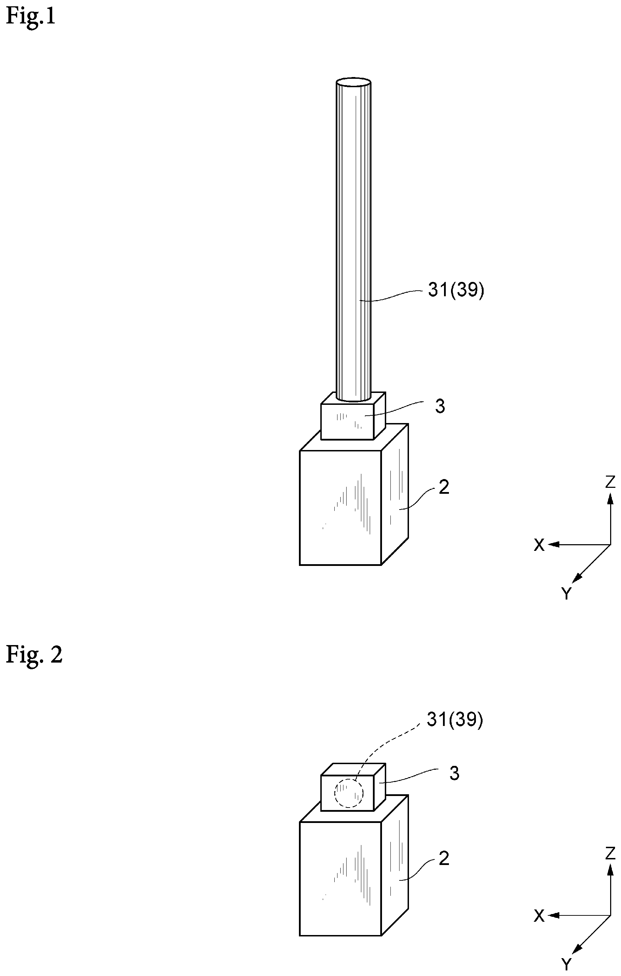

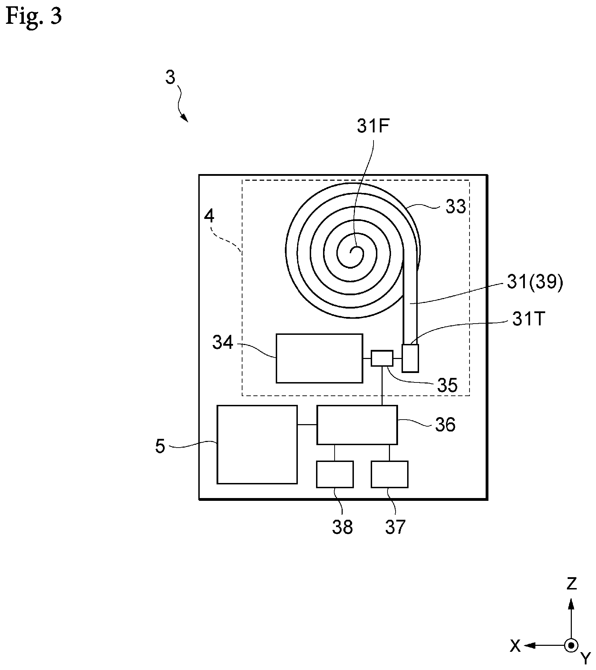

With reference to Figures 1 to 3, the overall configuration of a deorbit apparatus 3 according to the present embodiment will be described. Figure 1 is a schematic diagram illustrating a state in which the deorbit apparatus 3 according to the embodiment is mounted on a spacecraft 2. Figure 2 is a schematic diagram illustrating another state in which the deorbit apparatus 3 according to the embodiment is mounted on the spacecraft. Figure 3 is a block diagram illustrating an example of the functional configuration of the deorbit apparatus 3 according to the embodiment.

In Figures 1 to 3, the advancing direction of the spacecraft 2 (i.e., the orbiting direction of the Earth or the like) is defined as an X-axis, a horizontal direction perpendicular to the X-axis is defined as a Y-axis, and a direction perpendicular to both the X-axis and the Y-axis is defined as a Z-axis. In particular, a direction along the Z-axis that faces away from the Earth (i.e., the positive Z-axis direction in Figure 1) will be referred to as a "zenith direction," and a direction along the Z-axis that faces toward the Earth will be referred to as a "geocentric direction" in some cases.

The spacecraft 2 moves along the orbit of the Earth or the like in outer space. The spacecraft 2 is not particularly limited as long as it is an object that moves along an orbit, and may include, in addition to an artificial satellite, a rocket, a space station, a part thereof, or the like. The altitude of the orbit is not particularly limited but may be approximately 200 to 1000 km, for example. Furthermore, while moving along the orbit, the spacecraft 2 rotates on its axis at various rotation speeds and in rotation directions. Furthermore, in order to control the attitude of the spacecraft 2, the spacecraft 2 may be provided with a device such as a reaction wheel that rotates at a specified rotation speed about a specified rotation axis.

The deorbit apparatus 3 is mounted on an object, such as the spacecraft 2 that moves along an orbit in outer space, via a specified electrical and mechanical interface for transmitting and receiving information, power, and the like to and from the object and for performing mechanical interactions with the object. This electrical and mechanical interface may, for example, be one that satisfies high durability against vibrations or the like during the launch or orbital operation of the spacecraft 2.

The deorbit apparatus 3 is an apparatus for deorbiting an object such as the spacecraft 2 from an orbit. For this purpose, the deorbit apparatus 3 includes a deorbit unit 4. The deorbit unit 4 includes, for example, a resistance-force generation unit that generates a resistance force against orbital movement of the spacecraft 2, and deorbits the spacecraft 2 by generating this resistance force. The configuration of the deorbit unit 4 will be described later.

The deorbit apparatus 3 further includes at least one examination unit 5 that, while advancing through outer space or a space equivalent thereto in a state of being mounted on an object such as the spacecraft 2, performs a specified experiment under a microgravity environment in these spaces. Note that the microgravity refers to a pseudo gravitational force that is apparently smaller than the gravitational force received on the surface of the Earth, the pseudo gravitational force being a resultant force of an attraction force that an object receives from the Earth and a centrifugal force that this object receives when rotating while moving along an orbit or the like. This enables the pseudo-realization of the gravitational environment on the surface of the Moon or Mars within the examination unit 5. The configuration of the examination unit 5 will be described later.

The deorbit apparatus 3 also includes a control unit 36, a communication unit 37, a battery unit 38, and a power generation unit 39.

The control unit 36 comprehensively controls the deorbit apparatus 3. The control unit 36 may be configured as a computer that includes a processor such as a CPU (Central Processing Unit) and a memory such as a RAM (Random Access Memory) and a ROM (Read Only Memory).

The communication unit 37 is a communication module that functions as a transmission unit and/or a reception unit and is used to transmit and receive communication signals to and from any external equipment. The communication unit 37 may be configured to have an antenna, a communication circuit, or the like. The communication unit 37 may receive signals from a management device on the ground, another spacecraft, another deorbit apparatus mounted on the other spacecraft, or the like, and supply the received signals to the control unit 36. Furthermore, the communication unit 37 may transmit signals supplied from the control unit 36 to a management device on the ground, another spacecraft, another deorbit apparatus mounted on the other spacecraft, or the like.

The battery unit 38 is configured to include a battery capable of storing (accumulating) power for supply to the deorbit apparatus 3. In particular, the battery unit 38 may be configured to be capable of storing power for supply to the deorbit unit 4 and/or the examination unit 5. Furthermore, the battery unit 38 may be configured to be capable of storing power for supply to the spacecraft 2. The configuration of the battery provided in the battery unit 38 is not particularly limited, but a lithium ion secondary battery, a fuel cell battery, or the like may be used, for example. Because the deorbit apparatus 3 includes the battery unit 38, power for the deorbit unit 4 and the examination unit 5 can be secured even when the power of the battery unit of the spacecraft 2 is used up or when a failure occurs in a configuration in which power is supplied from the spacecraft 2 to the deorbit apparatus 3. As a result, it is possible to continue examinations by the examination unit 5 over a period in which the spacecraft 2 deorbits.

The power generation unit 39 generates power for supply to the deorbit apparatus 3. In particular, the power generation unit 39 may be configured to be capable of supplying the generated power to the deorbit unit 4 and/or the examination unit 5. The configuration of the power generation unit 39 is not particularly limited as long as power can be generated, but the power generation unit 39 may include a thin film for solar power generation, which is made of a silicon system such as crystal silicon or amorphous silicon, a compound system such as CIS or CdTe, or an organic system such as dye sensitized or perovskite. The power generation unit 39 may be provided at any location in the deorbit apparatus 3 where light such as solar light can be received, for example, on an outer surface of an outer hull that accommodates the deorbit apparatus. In particular, as illustrated in Figures 1 to 3, the power generation unit 39 may be provided on at least a part of a tether 31. As a result, a three-dimensional shape formed by the deployed tether 31 can be effectively utilized, thereby improving the power generation efficiency of the power generation unit 39. Note that when the tether 31 is configured to include a conductive material as will be described later, the power generation unit 39 may generate some of the power for supply to the deorbit apparatus 3 on the basis of a current flowing through the tether 31 due to an induced electromotive force.

### (2) Deorbit Unit

With reference to Figures 1 to 3, the deorbit unit 4 will be described. The deorbit unit 4 illustrated in Figures 1 to 3 includes the tether 31. The tether 31 is an example of a resistance-force generation unit that generates a resistance force against the orbital movement of the spacecraft 2. The deorbit unit 4 further includes an accommodation unit 33, a gas supply unit 34, and an electromagnetic valve 35. In a deployed state, the tether 31 is configured to be capable of tilting relative to the Z-axis with the deorbit unit 4 as a base.

The tether 31 may have an inflatable structure and is configured to inflate and form a specified three-dimensional shape, for example, when gas is supplied from the gas supply unit 34 provided in the deorbit unit 4 to the interior of the tether 31.

One end of the tether 31 may be configured as a fixed end 31T fixed to the deorbit unit 4, and the other end thereof may be configured as a free end 31F not fixed to the deorbit unit 4. The deorbit unit 4 is configured to be capable of accommodating the tether 31 as illustrated, for example, in Figure 2 during a mission or the like of the spacecraft 2. Furthermore, the deorbit unit 4 is configured to release the free end 31F of the tether 31 into outer space at a specified timing, such as when a mission of the spacecraft 2 is completed, and to inflate the tether 31 to form a specified three-dimensional shape by supplying specified gas to the interior of the tether 31. Figure 1 illustrates a state in which the tether 31 is deployed outside of the deorbit unit 4. Note that although the tether 31 is drawn as being parallel to the Z-axis in Figure 1, it is configured to be capable of tilting such that it forms a specified angle relative to the Z-axis with the deorbit unit 4 as a base, in response to forces such as gravity-gradient torque or atmospheric resistance.

The tether 31 may be made, for example, of a flexible thin-film member. The material constituting the tether 31 may include, for example, one or more of the following materials: a resin, a metallic thin film (formed by sputtering or the like), an adhesive, carbon fiber reinforced plastics (CFRP), or a carbon film. Note that the tether 31 may have a marginal portion in which a plurality of thin-film members is bonded. This marginal portion can also serve as a region that serves to receive atmospheric resistance.

The specified three-dimensional shape formed by the deployed tether 31 may be a shape capable of receiving atmospheric resistance to deorbit the spacecraft 2. The specified three-dimensional shape may, for example, be a highly isotropic three-dimensional shape having its axis along the longitudinal direction (i.e., the Z-axis direction in Figure 1) of the tether 31. The higher the isotropy of the tether 31 having its longitudinal axis (the Z-axis direction in Figure 1), the smaller the fluctuations in atmospheric resistance when the tether 31 rotates about this axis. Therefore, rotation of the tether about this axis is less likely to occur, the attitude of the tether about the longitudinal direction is stabilized, and securement of a projected area for receiving atmospheric resistance is facilitated regardless of the attitude about the longitudinal direction. The highly isotropic shape of the tether 31 having its longitudinal axis (the Z-axis direction in Figure 1) may, for example, be a substantially columnar shape as illustrated in Figure 1. In this case, the dimension of the tether 31 along the longitudinal direction is not particularly limited and may, for example, range from several meters to several kilometers.

It is likely that gravity-gradient torque acts on the tether 31. Here, the gravity-gradient torque refers to a force that acts to orient the attitude of an object toward a specified direction due to spatial variations in gravitational acceleration acting on the object. In particular, when an object orbiting around a gravitational center such as the Earth has an elongated shape like the tether 31, the gravity-gradient torque acts to orient its longitudinal direction toward the gravitational center, that is, to decrease the angle between its elongated direction and the Z-axis direction.

Note that the material constituting the tether 31 may include metallic fibers such as aluminum or conductive materials such as conductive high-strength fibers. A Lorentz force generated in the tether 31 as it moves through a magnetic field in outer space functions, in addition to or instead of atmospheric resistance, as a resistance force against the orbital movement of the spacecraft 2.

The accommodation unit 33 may be configured to have a space capable of accommodating the tether 31. The manner in which the tether 31 is accommodated inside of the accommodation unit 33 is not particularly limited, but the tether 31 may, for example, be wound as illustrated in Figure 3, or may be folded.

The gas supply unit 34 may store gas for supply to the tether 31. The gas supply unit 34 may be configured, for example, as a gas cartridge. The type of gas for supply to the tether 31 is not particularly limited, but nitrogen gas may be used, for example.

The electromagnetic valve 35 may be connected to both the gas supply unit 34 and the tether 31. The electromagnetic valve 35 may adjust its opening and closing on the basis of a control signal received from the control unit 36 and regulate the amount of gas supplied from the gas supply unit 34 to the tether 31.

One end 31T of the tether 31 may be configured as a fixed end fixed at a specified position of the deorbit unit 4. The end 31T of the tether may be connected to the gas supply unit 34 via the electromagnetic valve 35. The other end 31F of the tether 31 may be configured as a free end not fixed to the deorbit unit 4. During, for example, a mission or the like of the spacecraft 2, the tether 31 may be accommodated inside of the accommodation unit 33.

### (3) Examination Unit

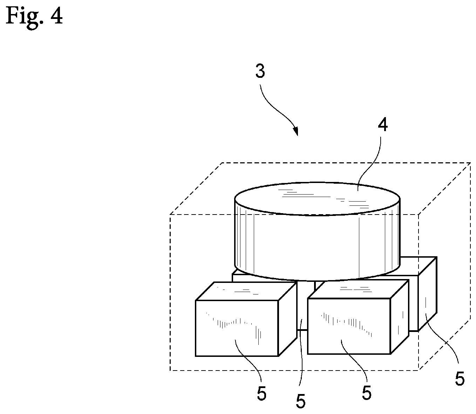

With reference to Figures 3 and 4, the examination unit 5 will be described. Figure 4 is a schematic diagram illustrating an example of the arrangement of the deorbit unit 4 and the examination unit 5 in the deorbit apparatus 3 according to the embodiment. Note that in Figure 4, units or members other than the deorbit unit 4 and the examination unit 5 are omitted for convenience of explanation.

The examination unit 5 is a unit for performing examinations in various fields. These fields are not particularly limited but may include, for example, chemistry, biochemistry, medicine, bioengineering, genetics, biology, physics, environmental science, Earth and planetary sciences, or the like. The examination unit 5 may be configured to include facilities, such as various appliances or devices, inside of a closed or open housing partitioned by a metallic material or the like. The appliances or devices provided in the examination unit 5 are not particularly limited but may include, for example, sensors or measurement devices for detecting gravity, temperature, humidity, or the like, analysis devices for analyzing the components or structures of substances, composite devices for combining samples or substances, or the like. More specifically, the appliances or devices may include, for example, appliances such as laboratory dishes, illumination devices, temperature control devices, automatic titration devices, chromatography devices, microscopes, cameras, PCR devices, DNA sequencers, X-ray analysis devices, MRI devices, spectrophotometers, laser devices, or the like.

The examination unit 5 may include a computer including a processor such as a CPU and a memory such as a RAM and a ROM. The examinations performed by the examination unit 5 may be automatically executed when this computer controls the members, devices, or the like inside of the examination unit 5.

The examination unit 5 may, for example, be configured as a container to be easily attachable to and detachable from the deorbit apparatus 3. In particular, the deorbit apparatus 3 may be configured to be capable of installing a plurality of examination units 5. As a result, any number of examination units 5 are installed inside of the deorbit apparatus 3, thereby enabling adjustment of the volume of the internal space of the deorbit apparatus 3. Figure 4 illustrates an example in which four examination units 5 are installed in the deorbit apparatus 3.

When the deorbit apparatus 3 includes a plurality of examination units 5, the appliances or devices installed inside of the individual examination units 5 may be the same, or may partially or entirely differ from each other. Figure 4 illustrates, as an example, a configuration in which the four examination units 5 are installed below the deorbit unit 4. However, the installation positions of the deorbit unit 4 and the examination units 5 are not particularly limited. The deorbit unit 4 and the examination units 5 may, for example, be configured to be installable such that the center of gravity of the deorbit apparatus 3 is located near the center of the deorbit apparatus 3. As a result, for example, even when the weight balance of the deorbit apparatus 3 or the spacecraft 2 in which the deorbit apparatus 3 is installed becomes biased due to attachment of the deorbit unit 4, it is possible to adjust the weight balance of the entire spacecraft 2 equipped with the deorbit apparatus 3 by arranging the separate examination units 5 at positions away from the deorbit unit 4.

Regarding the examination units 5, information such as examination contents and environments required for examinations (which may include the magnitude of microgravity in addition to internal environments of the examination units 5 such as temperature, humidity, or pressure) may be set. This information may be stored in a memory or the like provided in the control unit 36, or may be acquired by the deorbit apparatus 3 from an external device via the communication unit 37. The control unit 36 may perform control of the examination units 5 on the basis of these information items.

### (4) Control of Each Unit

Next, the control of each unit of the deorbit apparatus 3 by the control unit 36 will be described.

### <Specified Conditions>

The control unit 36 may perform control related to the deorbit unit 4 and/or the examination unit 5 in accordance with specified conditions. Here, the specified conditions may be based on a control signal that the communication unit 37 receives from an external device. Alternatively, the specified conditions may be conditions defined by at least one of movement-state information, deorbit-state information, and power information.

The movement-state information may be information related to the movement state of the spacecraft 2 along its orbit. Specifically, the movement-state information may include the position, travel distance, travel speed, attitude, rotation speed for attitude control, elapsed travel time, or the like of the spacecraft 2.

The deorbit-state information may be information related to the deorbit state of the spacecraft 2. Specifically, the deorbit-state information may include the altitude of the spacecraft 2, information related to activation of the deorbit unit 4 (such as activation/deactivation of the deorbit unit 4, elapsed time since activation, or power consumption of the deorbit unit 4), or the like.

The power information may be information related to the power of the spacecraft 2 and/or the deorbit apparatus 3. Specifically, the power information related to the power of the deorbit apparatus 3 may include information related to the power stored by the battery unit 38 (such as a remaining power amount, a power reduction rate, a voltage value, or a current value), information related to the power generated by the power generation unit 39 (such as power generation capability or a power generation amount per unit time), or the like. Furthermore, the power information related to the power of the spacecraft 2 may include information related to the power stored by a battery not illustrated of the spacecraft 2 (such as a remaining power amount, a power reduction rate, a voltage value, or a current value), information related to the power generated by a power generation unit not illustrated of the spacecraft 2 (such as power generation capability or a power generation amount per unit time), or the like.

These various information items (such as the movement-state information, the deorbit-state information, and the power information) may be stored in a memory or the like provided in the control unit 36, or may be acquired by the deorbit apparatus 3 from an external device via the communication unit 37.

The specified conditions may be defined, for example, as a result obtained by comparing at least one of the movement-state information, the deorbit-state information, and the power information with a specified threshold. Specifically, the specified conditions may be defined, for example, as "when the travel speed of the spacecraft 2 becomes equal to or greater than a threshold," "when the altitude of the spacecraft 2 becomes equal to or less than a threshold," "when an elapsed time since activation of the deorbit unit 4 becomes equal to or less than a threshold," "when power stored by the battery unit 38 becomes equal to or less than a threshold," "when a power generation amount of the power generation unit 39 per unit time becomes equal to or greater than a threshold," "when the voltage of the power supplied from the spacecraft 3 to the deorbit apparatus 3 becomes equal to or less than a threshold," or the like.

### <Control of Deorbit Unit 4>

The control unit 36 may, for example, perform control related to the deorbit unit 4 in accordance with specified conditions.

The control unit 36 may control the deorbit unit 4 so that the tether 31 can receive atmospheric resistance, for example, when specified conditions are met. The specified conditions may be met, for example, when the movement-state information, the deorbit-state information, the power information, or the like becomes equal to or greater than or becomes equal to or less than a specified threshold, or when a specified signal is received by the communication unit 37 from an external device at a specified timing, such as when a mission of the spacecraft is completed.

First, the control unit 36 opens, for example, an opening/closing lid not illustrated of the accommodation unit 33. As a result, the tether 31 is put into a state in which it can be released to the outside of the accommodation unit 33. Then, the control unit 36 supplies gas from the gas supply unit 34 into the tether 31 by controlling the opening of the electromagnetic valve 35. As a result, the tether 31 inflates and deploys to form a specified three-dimensional shape and is put into a state in which it can receive atmospheric resistance. Due to the atmospheric resistance received by the tether 31, the spacecraft 2 including the deorbit apparatus 3 gradually decreases its altitude and eventually deorbits.

The speed at which the tether 31 deploys with the supply of gas is not particularly limited. For example, it may be a speed at which it takes approximately several hours to deploy the tether 31 by one meter, or a speed at which it takes approximately several days to several months to deploy the tether 31. When the deployed tether 31 receives atmospheric resistance, the spacecraft 2 equipped with the deorbit apparatus 3 slows down, gradually deorbits, and descends toward the atmosphere. The duration from the start of deorbit until the spacecraft 2 reaches the altitude at which it enters the atmosphere is not particularly limited, but it may be several hours, several weeks, several months, several years, several tens of years, or the like.

The deployed length of the tether 31 affects the rotation speed of the spacecraft 2 while it orbits. Therefore, for example, the control unit 36 may first acquire information on the magnitude of microgravity required by the examination unit 5 and the rotation speed of the spacecraft 2, and then adjust the length of the tether 31 to achieve the magnitude of the microgravity required by the examination unit 5.

The control unit 36 may, for example, transmit information related to the deorbit unit 4 to an external device via the communication unit 37.

### <Control of Examination Unit 5>

The control unit 36 may, for example, perform control related to the examination unit 5 in accordance with specified conditions.

The content of control related to the examination unit 5 is not particularly limited as long as it pertains to the examination unit 5. However, it may include, for example, control of the examination environment inside of the examination unit, control of the timing of examinations performed by the examination unit, or the like. The control of the examination environment inside of the examination unit may include, for example, control of temperature, humidity, and pressure inside of the examination unit (including the degree of opening of the examination unit relative to the atmosphere). Furthermore, the control of the timing of examinations performed by the examination unit may include, for example, starting or stopping an examination. Furthermore, when the deorbit apparatus 3 includes a plurality of examination units 5, the control unit 36 may also control the order of examinations performed by the respective examination units 5. The control unit 36 may perform the control of the examination units 5, for example, when a value calculated on the basis of at least the movement-state information, the deorbit-state information, and the power information becomes equal to or greater than or becomes equal to or less than a specified threshold. Specifically, for example, when the altitude of the spacecraft 2 reaches a value set for the examination unit 5, the control unit 36 may start or stop the examination of the examination unit 5. Furthermore, for example, when the deorbit unit 4 is activated, or when the elapsed time since activation of the deorbit unit 4 reaches a specified threshold, the control unit 36 may start the examination of the examination unit 5.

The control unit 36 may, for example, transmit information related to the examination unit 5 to an external device via the communication unit 37.

### <Control of Battery Unit 38>

The control unit 36 may, for example, perform control related to the battery unit 38 in accordance with specified conditions.

The control unit 36 may, for example, control the power supplied from the battery unit 38 to the deorbit unit 4 and/or to the examination unit 5 in accordance with specified conditions. The control unit 36 may first acquire information on the power required by the deorbit unit 4 and the examination unit 5, and then distribute at least some of the power stored in the battery unit 38 to the deorbit unit 4 and the examination unit 5 on the basis of this information. Note that when the deorbit apparatus 3 includes a plurality of examination units 5, the control unit 36 may first acquire information on the power required by the respective examination units 5, and then distribute at least some of the power stored in the battery unit 38 to the respective examination units 5 on the basis of this information.

The control unit 36 may supply power from the battery unit 38 with priority given to one of the deorbit unit 4 and the examination unit 5 over the other. In particular, the control unit 36 may perform this control when the power stored in the battery unit 38 is smaller than the required power. For example, the control unit 36 may first supply the required power from the battery unit 38 to the deorbit unit 4, and then supply the remaining power to the examination unit 5. As a result, it is possible to reliably carry out the deorbit of the spacecraft 2 using the deorbit apparatus 3. Alternatively, for example, the control unit 36 may first supply the required power from the battery unit 38 to the examination unit 5, and then supply the remaining power to the deorbit unit 4. As a result, it is possible to reliably carry out examinations using the examination unit 5 provided in the deorbit apparatus 3.

The control unit 36 may change the unit to which power from the battery unit 38 is supplied with priority among the deorbit unit 4 and the examination unit 5, in accordance with information related to the deorbit state of the spacecraft 2 (deorbit-state information). For example, the control unit 36 may change the prioritized unit between the deorbit unit 4 and the examination unit 5 depending on whether the altitude of the spacecraft 2, the elapsed time since activation of the deorbit unit 4, or the like is equal to or greater than a specified threshold. Furthermore, when the deorbit apparatus 3 includes a plurality of examination units 5, power may be supplied from the battery unit 38 in accordance with the priority set for each examination unit 5.

### <Control of Power Generation Unit 39>

The control unit 36 may, for example, perform control related to the power generation unit 39 in accordance with specified conditions.

The control unit 36 may, for example, control the power supplied from the power generation unit 39 to the deorbit unit 4 and/or to the examination unit 5 in accordance with specified conditions. The control unit 36 may first acquire information on the power required by the deorbit unit 4 and the examination unit 5, and then distribute at least some of the power supplied from the power generation unit 39 to the deorbit unit 4 and the examination unit 5 on the basis of this information. Note that when the deorbit apparatus 3 includes a plurality of examination units 5, the control unit 36 may first acquire information on the power required by the respective examination units 5, and then distribute at least some of the power supplied from the power generation unit 39 to the respective examination units 5 on the basis of this information.

The control unit 36 may supply power from the power generation unit 39 with priority given to one of the deorbit unit 4 and the examination unit 5 over the other. In particular, this control may be performed when the power supplied from the power generation unit 39 is smaller than the required power. For example, the control unit 36 may first supply the required power from the power generation unit 39 to the deorbit unit 4, and then supply the remaining power to the examination unit 5. As a result, it is possible to reliably carry out the deorbit of the spacecraft 2 using the deorbit apparatus 3. Alternatively, for example, the control unit 36 may first supply the required power from the power generation unit 39 to the examination unit 5, and then supply the remaining power to the deorbit unit 4. As a result, it is possible to reliably carry out examinations using the examination unit 5 provided in the deorbit apparatus 3.

The control unit 36 may change the unit to which power from the power generation unit 39 is supplied with priority among the deorbit unit 4 and the examination unit 5, in accordance with information related to the deorbit state of the spacecraft 2 (deorbit-state information). For example, the control unit 36 may change the prioritized unit between the deorbit unit 4 and the examination unit 5 depending on whether the altitude of the spacecraft 2, the elapsed time since activation of the deorbit unit 4, or the like is equal to or greater than a specified threshold. Furthermore, when the deorbit apparatus 3 includes a plurality of examination units 5, power may be supplied from the power generation unit 39 in accordance with the priority set for each examination unit 5.

### (5) Modified Examples

A subunit may be provided at the end 31F of the tether 31. The subunit may be configured, for example, as a sensor for detecting specified parameters. Furthermore, the subunit may be configured to include, for example, an antenna, a communication circuit, or the like as a communication module for transmitting and receiving communication signals to and from any external equipment. Furthermore, the subunit may include a processor such as a CPU and a memory such as a RAM and a ROM. The subunit may acquire position information of the spacecraft 2 and the subunit itself, or may acquire the deployed state of the tether 31 and transmit and receive these information items to and from the control unit 36, a management device on the ground, or other spacecrafts.

The resistance-force generation unit provided in the deorbit unit 4 is the tether 31 that receives atmospheric resistance serving as a resistance force against the orbital movement of the spacecraft 2, or the tether 31 including a conductive material that generates a Lorentz force as this resistance force. However, the resistance-force generation unit is not limited to the tether 31 and may also be a thruster such as a cold gas thruster. In this case, a reaction force generated when the thruster ejects gas in the movement direction of the spacecraft 2 serves as a resistance force against the orbital movement of the spacecraft 2. Note that this thruster may also serve as a propulsion device for the orbital movement of the spacecraft 2 or as a device for attitude control of the spacecraft 2. The configuration of the resistance-force generation unit that receives atmospheric resistance may not be limited to an inflatable structure or a tether shape, but it may have, for example, a fabric shape, a fan shape, an umbrella shape, or the like, or may be composed of a frame and a sheet.

Note that the examination unit 5 may be installed in a vacant space inside of the deorbit unit 4. Furthermore, when the tether 31 has an inflatable structure, the examination unit 5 may be provided inside of the tether 31 and configured to be capable of performing examinations related to the movement of gas supplied into the tether 31 or to the movement of a float in the gas.

The examination unit 5 may also function as the gas supply unit 34. Specifically, the examination unit 5 may be configured to store gas in advance and serve as a gas source for the tether 31 having an inflatable structure.

The embodiments described above are intended to facilitate understanding of the present invention and not intended to limit the interpretation of the present invention. The respective components provided in the embodiments, as well as their arrangements, materials, conditions, shapes, sizes, and the like are not limited to those illustrated and may be modified as appropriate. Furthermore, configurations illustrated in different embodiments may be partially replaced with or combined with each other.

### Reference Signs List

- 2: Spacecraft
- 3: Deorbit apparatus
- 31: Tether
- 31F, 31T: End
- 33: Accommodation unit
- 34: Gas supply unit
- 35: Electromagnetic valve
- 36: Control unit
- 37: Communication unit
- 38: Battery unit
- 39: Power generation unit
- 4: Deorbit unit
- 5: Examination unit

## Claims

1. A deorbit apparatus mounted on an object that moves along an orbit in outer space and used to deorbit the object, the deorbit apparatus comprising:
a deorbit unit including a resistance-force generation unit that generates a resistance force against movement of the object on the orbit;
an examination unit for performing a specified examination; and
a control unit that performs control related to the deorbit unit and/or the examination unit in accordance with a specified condition.

2. The deorbit apparatus according to claim 1, wherein
the specified condition is a condition defined by at least one of
movement-state information that is information related to a movement state of the object on the orbit,
deorbit-state information that is information related to a deorbit state of the object, and
power information that is information related to power of the object and/or the deorbit apparatus and is capable of being supplied to the deorbit apparatus.

3. The deorbit apparatus according to claim 1, wherein
the control unit controls at least one of an environment in the examination unit and a timing of an examination performed by the examination unit.

4. The deorbit apparatus according to claim 1, wherein
the control unit controls the deorbit unit to cause the resistance-force generation unit to generate the resistance force.

5. The deorbit apparatus according to claim 1, further comprising
a transmission unit that transmits information related to the specified examination performed by the examination unit to a specified information processing apparatus.

6. The deorbit apparatus according to claim 1, wherein
the control unit determines whether the resistance-force generation unit has been activated, and operates the examination unit after determining that the resistance-force generation unit has been activated.

7. The deorbit apparatus according to claim 1, further comprising
a power supply unit for supplying power to the deorbit apparatus.

8. The deorbit apparatus according to claim 7, wherein
the power supply unit includes a battery unit that stores power for supply to the deorbit apparatus and/or a power generation unit that generates power for supply to the deorbit apparatus.

9. The deorbit apparatus according to claim 8, wherein
the control unit controls power for supply to the deorbit unit and/or the examination unit from the battery unit and/or the power generation unit in accordance with the specified condition.

10. The deorbit apparatus according to claim 8, wherein
the resistance-force generation unit is configured to be capable of forming a specified three-dimensional shape to receive atmospheric resistance as the resistance force, and
the power generation unit is provided in the resistance-force generation unit.

11. The deorbit apparatus according to claim 8, wherein
the resistance-force generation unit is configured to include a conductive material capable of generating a Lorentz force as the resistance force, and
the power generation unit generates the power on the basis of a current flowing through the conductive material of the resistance-force generation unit.
